Europäisches Patentamt

European Patent Office

Office européen des brevets

(19)

(11) **EP 1 058 132 A1**

(12) **DEMANDE DE BREVET EUROPEEN**

(43) Date de publication:
**06.12.2000 Bulletin 2000/49**

(51) Int Cl.⁷: **G01V 3/38**, G01V 3/12,
G01V 3/15

(21) Numéro de dépôt: **00401504.6**

(22) Date de dépôt: **29.05.2000**

(84) Etats contractants désignés:
**AT BE CH CY DE DK ES FI FR GB GR IE IT LI LU
MC NL PT SE**
Etats d'extension désignés:
**AL LT LV MK RO SI**

(30) Priorité: **02.06.1999 FR 9906950**

(71) Demandeur: **COMMISSARIAT A L'ENERGIE
ATOMIQUE
75752 Paris Cédex 15 (FR)**

(72) Inventeurs:
• **Berthier, Jean**
  **38240 Meylan (FR)**
• **Robach, Francis**
  **38330 Biviers (FR)**
• **Manet, Pascal**
  **38600 Fontaine (FR)**

(74) Mandataire: **Brykman, Georges et al**
  **c/o BREVATOME**
  **3, rue du Docteur Lancereaux**
  **75008 Paris (FR)**

(54) **Procédé de détection électromagnétique d'objets conducteurs utilisant une base de signaux stockés**

(57) Procédé, dans lequel pour détecter des objets conducteurs enfouis en sous-sol, on envoie une série d'impulsions électromagnétiques, et on compare un signal reçu en retour à des caractéristiques de signaux stockés dans une base de données, caractérisé en ce que: on calcule une valeur représentant un écart entre l'ensemble de caractéristiques de la courbe réelle moyenne de décroissance et chacun des ensembles des même caractéristiques de la base de données ; on compare le plus petit des écarts à une valeur seuil ; on décide qu'il y a détection si au moins un écart est inférieur à un seuil prédéterminé, l'objet et sa profondeur d'enfouissement étant définis comme l'objet de la base de données qui a présenté la valeur d'écart minimum.

EP 1 058 132 A1

## Description

### Domaine de l'invention

L'invention se situe dans le domaine de la détection d'objets conducteurs électriques enfouis à peu de profondeur dans le sol en particulier, dans le sous-sol des mers, par induction électromagnétique active.

L'invention est applicable notamment à la détection de mines sous marines déposées près des côtes, dans des eaux peu profondes. La plupart du temps, du fait de leur poids et de l'action des vagues et des marées, ces mines se trouvent enfouies dans les sédiments et les sables du littoral.

Un autre exemple est la recherche archéologique de débris métalliques envasés au cours du temps dans les sables et sédiments du fond des mers ou des rivières.

### Arrière plan technologique

Les méthodes par magnétométrie RMN classique permettent de localiser, dans certains cas, des objets magnétiques enfouis peu profondément ; leur limitation provient des bruits ambiants, des fausses alarmes dues à tout autre objet magnétique, ainsi que de la forte décroissance du signal avec la distance.

Les techniques de détection acoustiques (sonar) développées pour le même genre d'applications à terre sont très peu efficaces pour une situation en mer [1] car, d'une part, si l'on utilise des hautes fréquences, l'atténuation des ondes est très grande dans la mer et les sédiments saturés en eau ; d'autre part, si l'on utilise des fréquences plus basses, la directivité de l'instrument est faible et de nombreux échos perturbateurs proviennent des rugosités du fond et de la géologie des sédiments, masquant le signal "utile".

De plus, les techniques de détection classiques par radar [2] GPR (ground penetrating radar) ne sont pas efficaces du fait de l'absorption très élevée des ondes électromagnétiques hautes fréquences par la couche d'eau et par les sédiments saturés en eau.

Enfin, il est souvent impossible de détecter ces objets par des méthodes optiques du fait de leur enfouissement ou encore - si ces objets ne sont pas totalement enfouis - de la turbidité du fond, notamment en zone côtière, générée par les vagues et la houle.

Récemment des méthodes électromagnétiques actives ont été développées pour la détection de ce type d'objets. Nous exposons au paragraphe suivant le principe de ces méthodes, des exemples de brevets déjà existants ainsi que leurs limitations.

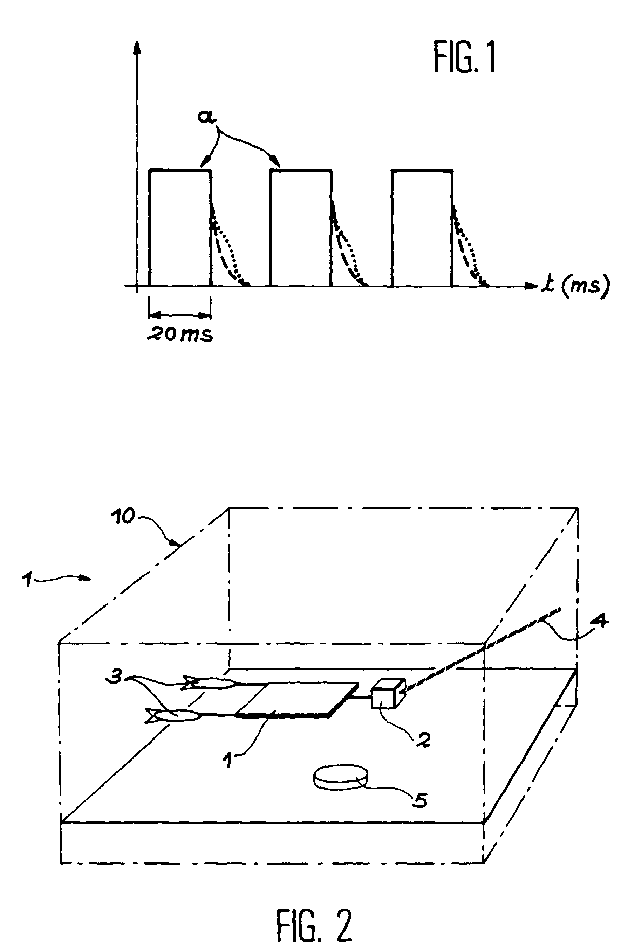

Le principe de la détection repose sur l'induction électromagnétique. Plus précisément, des impulsions de courant circulant dans une antenne émettrice induisent des courants de Foucault qui se concentrent dans les parties les plus conductrices du sol - notamment, dans l'objet à détecter ; une fois le courant coupé dans l'antenne émettrice, les courants induits vont à leur tour provoquer par phénomène d'induction, un courant électrique dans une antenne réceptrice. Le principe est donc de charger électriquement les inhomogénéités conductrices du sol qui, à leur tour, restituent une partie de cette énergie à l'antenne réceptrice. Le signal réponse de l'antenne réceptrice est alors analysé pour diagnostiquer la présence ou non d'un objet métallique ou conducteur électrique. Sur la figure 1, on a schématisé le courant électrique lorsque l'antenne émettrice sert également d'antenne réceptrice.

Sur cette figure, les impulsions de courant émises par l'antenne sont représentées en traits pleins. La forme du signal reçu en retour est représentée en pointillés ayant la forme du pointillé b lorsqu'il n'y a pas d'objets métalliques enfouis et du pointillé c lorsqu'un objet est enfoui. Le signal reçu en retour est dans ce cas de niveau plus élevé.

Un exemple d'emploi d'un tel procédé est décrit par exemple dans le brevet US-A-5 654 637 délivré à GEONICS [3] intitulé "Method for detecting buried high conductivity objects including scaling of voltages for eliminating noise of a particular depth". Ce brevet décrit un système électromagnétique impulsionnel pour détecter des objets métalliques dans le sol. Le principe du fonctionnement est celui exposé plus haut : des impulsions de courant électrique induisent des courants dans l'objet métallique à détecter. Le système d'antenne de réception est constitué de deux antennes horizontales situées sur la même verticale. Ce système permet de réduire les bruits et de donner une estimation de la profondeur de l'objet.

Ce brevet est destiné à des applications de recherche d'objets et de pièces métalliques dans le sol. Il ne s'applique pas directement dans des milieux "hostiles" comme en mer, car dans ce cas le signal réponse enregistré par la deuxième boucle (deuxième antenne de réception) est trop faible du fait de l'absorption du champ par l'eau de mer.

Un autre exemple d'emploi d'un tel procédé est décrit dans la demande de brevet WO 98/08106 de février 1998 de KELLER [4] intitulé "non obstrusive weapon detection system and method for discrimination between a handgun and other metal object". Il s'agit cette fois de détecter les armes portées par des personnes dans des aéroports.

Là encore, le principe du dispositif est le même : un émetteur parcouru par des impulsions de courant électrique induit du courant électrique dans l'objet à détecter. Des capteurs magnétiques rapides enregistrent alors la réponse temporelle. La constante de temps caractéristique de la décroissance de la réponse permet alors de différencier les différents objets métalliques que peuvent porter les différentes personnes dans des lieux publics. La valeur mesurée de la constante de temps est comparée à des valeurs de constantes répertoriées dans une base de données.

Le procédé décrit dans ce brevet suppose, a juste titre, que la position de l'objet par rapport à la boucle antenne est connue. Il ne s'intéresse qu'à la constante de temps de la décroissance.

Un tel procédé n'est pas applicable à des objets de forme inconnue situés à des distances inconnues.

On citera encore la demande de brevet [5] de P. ELLIOT n° WO 92/19989 de novembre 1992 intitulé : "Airborne transient electromagnetic method with ground loops". Cette demande de brevet est destinée principalement à des applications - recherche pétrolière par exemple - car elle décrit un dispositif avec un émetteur de très grande taille et un récepteur aéroporté.

Cette demande de brevet [5] est nettement axée sur la géologie et la géophysique : les dimensions sont beaucoup trop importantes pour détecter des objets du type "mines" ; de plus, le système ne fonctionne pas dans un milieu marin.

L'état de la technique qui vient d'être décrit montre que lorsque les milieux où sont placées les antennes d'émission et de réception sont faiblement conducteurs, les dispositifs et procédés de l'art antérieur ne fonctionnent pas. En particulier, pour la mer, l'eau de la mer étant conductrice, une grande partie de l'énergie fournie est dissipée dans l'environnement marin et seule une faible partie constitue le signal "utilisable". Il faut donc utiliser un système beaucoup plus sensible et pouvoir traiter le signal pour faire un diagnostic de détection.

## Brève description de l'invention

Selon l'invention, on constitue dans une phase préalable une base de données comportant la réponse temporelle complète ou seulement certaines valeurs caractéristiques de cette réponse, pour tout objet conducteur tridimensionnel dont la forme peut s'apparenter à l'un des objets recherchés. Par exemple s'il s'agit d'une mine marine, on calcule ou on mesure au cours d'une campagne d'essais, la réponse temporelle d'un objet dont les parties extérieures conductrices correspondent à celles des mines recherchées. Ensuite dans une phase de recherche :

- on émet au moyen d'une antenne en forme d'au moins une boucle une série d'impulsions électromagnétiques,
- on enregistre pour chaque impulsion la réponse temporelle reçue en retour par une antenne réceptrice,
- on crée par le calcul une réponse temporelle moyenne en faisant la moyenne des différentes réponses reçues. On élimine de la sorte une partie des déformations des courbes individuelles dues aux bruits électromagnétiques de la mer qui sont relativement importants en raison de la faiblesse du signal.

Le traitement de cette courbe moyenne de décroissance pour identifier la présence d'un objet recherché, sa nature et sa localisation, peut ensuite prendre différentes formes. Ces différentes formes consistent à comparer des caractéristiques de la courbe moyenne de décroissance aux même caractéristiques des différentes courbes de décroissance obtenues dans la phase préalable. Les inventeurs ont déterminé que la probabilité de fausse alarme par comparaison de la seule constante de temps, comme dans la méthode décrite dans la demande de brevet déjà citée [4], était trop importante, en milieu marin.

Dans une première forme de traitement, les caractéristiques sélectionnées de la courbe moyenne de décroissance sont constitués par les valeurs du niveau du signal reçu, aux instants d'échantillonnage de ce signal, ces caractéristiques forment alors une courbe de décroissance réelle moyenne. Selon cette première forme de traitement :

- on calcule une valeur représentant un écart entre la courbe de décroissance réelle moyenne et chacune des courbes de décroissance des signaux numériques préenregistrés,
- on compare à une valeur seuil, la plus petite des valeurs représentant l'écart entre la courbe de décroissance réelle moyenne et chacune des courbes de décroissance préenregistrées,
- on décide qu'il y a détection si au moins une valeur représentant un écart entre cette courbe moyenne de décroissance et l'une des courbes de décroissance préenregistrées est inférieure à un seuil prédéterminé, l'objet et sa profondeur d'enfouissement étant définis comme l'objet de la base de données qui a présenté la valeur d'écart minimum.

Dans une seconde forme de traitement, les caractéristiques sélectionnées de la courbe moyenne de décroissance sont constituées par des caractéristiques mesurées ou calculées définissant certains aspects de cette courbe. Ces caractéristiques sont comparées aux même caractéristiques des différentes courbes de décroissance obtenues dans la phase préalable. Cette seconde forme de traitement présente par rapport à la première l'avantage de réduire la taille de la base de données, puisqu'on ne stocke que les caractéristiques de chaque courbe qui entrent dans l'ensemble sélectionné. Elle présente aussi l'avantage d'un traitement un peu plus rapide.

Ainsi dans sa première forme de réalisation l'invention est relative à un procédé de détection et de localisation d'objets électriquement conducteurs enfouis dans un sous-sol, le procédé consistant à envoyer une série d'impulsions électromagnétiques dans le milieu à explorer, au moyen d'une antenne émettrice ayant au moins une boucle, et à comparer un signal reçu en retour sur une antenne réceptrice ayant au moins une boucle, à au moins une caractéristique de signaux stockés dans une base de données procédé caractérisé en ce que :

- les caractéristiques des signaux stockés dans la base de données sont constituées par des données numériques définissant chacune dans le domaine temporel, la forme d'une courbe de décroissance de la valeur de signaux reçus dans une phase préalable à la recherche, par une première antenne réceptrice de formation de la base de données, au-dessus d'un sous-sol dans lequel est enfoui un objet ayant une forme conductrice extérieure identique ou proche d'un objet recherché, ceci pour différentes tailles et profondeurs de l'objet, après émission d'impulsions par une première antenne émettrice de formation de la base de données, et

ensuite dans une phase de recherche,

- on enregistre périodiquement des valeurs numériques d'échantillons de rang 1, 2,....n représentant ensemble une courbe de décroissance réelle d'un signal reçu par une antenne réceptrice de détection ayant même forme et même disposition que l'antenne réceptrice ayant servi à créer la base de données, ce signal étant reçu après émission par une antenne réelle ayant même forme et même disposition que l'antenne émettrice ayant servi à la formation des caractéristiques préenregistrées,
- on crée une courbe de décroissance moyenne d'un signal reçu moyen par détermination, de valeurs moyennes d'échantillons, dont chacune représente la valeur moyenne des valeurs d'échantillons de même rang,
- on calcule une valeur représentant un écart entre la courbe de décroissance réelle moyenne et chacune des courbes de décroissance des signaux numériques préenregistrés,
- on compare à une valeur seuil, la plus petite des valeurs représentant un écart entre la courbe de décroissance réelle moyenne et chacune des courbes de décroissance préenregistrées,
- on décide qu'il y a détection si au moins une valeur représentant un écart entre cette courbe moyenne de décroissance et l'une des courbes de décroissance préenregistrées est inférieure à un seuil prédéterminé, l'objet et sa profondeur d'enfouissement étant définis comme l'objet de la base de données qui a présenté la valeur d'écart minimum.

Dans sa seconde forme de réalisation l'invention est relative à un procédé de détection et de localisation d'objets électriquement conducteurs enfouis dans un sous-sol, le procédé consistant à envoyer une série d'impulsions électromagnétiques dans le milieu à explorer, au moyen d'une antenne émettrice ayant au moins une boucle, et à comparer un signal reçu en retour sur une antenne réceptrice ayant au moins une boucle, à au moins une caractéristique de signaux stockés dans une base de données procédé caractérisé en ce que :

- les caractéristiques des signaux stockés dans la base de données sont constituées par des points dans un espace à N dimensions, N étant un nombre entier supérieur ou égal à 1, les dimensions représentant des valeurs caractéristiques d'une courbe de décroissance dans le temps de la valeur de signaux reçus dans une phase préalable à la recherche, par une première antenne réceptrice de formation de la base de données, au-dessus d'un sous-sol dans lequel est enfoui un objet ayant une forme conductrice extérieure identique ou proche d'un objet recherché, ceci pour différentes tailles et profondeurs de l'objet, après émission d'impulsions par une première antenne émettrice de formation de la base de données, et
- on délimite dans l'espace à N dimensions un volume de détection, ce volume étant délimité par une surface enveloppe de tous les points contenus dans la base,

ensuite dans une phase de recherche,

- on enregistre périodiquement des valeurs numériques d'échantillons de rang 1, 2,.....n représentant ensemble une courbe de décroissance réelle d'un signal reçu par une antenne réceptrice de détection ayant même forme et même disposition par rapport au sous-sol que l'antenne réceptrice ayant servi à créer la base de données, ce signal étant reçu après émission par une antenne réelle ayant même forme et même disposition par rapport au sous-sol que l'antenne émettrice ayant servi à la formation des caractéristiques préenregistrées,
- on crée une courbe de décroissance moyenne d'un signal reçu moyen par détermination, de valeurs moyennes d'échantillons, dont chacune représente la valeur moyenne des valeurs d'échantillons de même rang,
- on détermine sur la courbe de décroissance moyenne les même valeurs caractéristiques que celle enregistrées dans la base de données,

- on situe dans l'espace à N dimensions de la base de données le point correspondant à la courbe réelle obtenue,
- on décide qu'il y a détection si le point de la courbe réelle obtenue est à l'intérieur du volume de détection, la position et la nature de l'objet étant déterminés en fonction des points voisins de l'espace.

**Brève description des dessins**

L'invention sera maintenant décrite en regard des dessins annexés, dans lesquels :

- la figure 1, déjà commentée, représente la forme des impulsions de détection émise, ainsi que la réponse temporelle à ces impulsions ;
- la figure 2 représente, de façon schématique, un dispositif destiné à fonctionner selon le procédé de l'invention ;
- la figure 3 symbolise différentes formes et profondeurs d'objets réels ou fictifs destinés à former sur une base expérimentale ou par le calcul une base de donnée ; et
- la figure 4 représente des courbes donnant en ordonnée la valeur de la puissance maximale de la réponse temporelle au cours d'un balayage au-dessus du sous-sol.

**Description d'un mode détaillé de réalisation**

Un dispositif 1 destiné à fonctionner en milieu marin 10 selon le procédé de l'invention est représenté sur la figure 2. Le dispositif comprend une antenne 1 couplée à un boîtier électronique de mesure 2. La distance de l'antenne 1 à la surface du fond du milieu marin 10 est maintenu à peu près constante, par exemple de l'ordre de 50 cm, grâce à des stabilisateurs 3. L'ensemble stabilisateur 3, antenne 1, boîtier électronique de mesure 2, est tracté au moyen d'un câble 4, par des moyens non représentés.

Le boîtier 2 est étanche et contient l'alimentation de puissance. L'antenne 1 est constituée par une ou plusieurs boucles de cuivre isolées électriquement. Dans l'exemple représenté l'antenne est à la fois émettrice et réceptrice et est constituée par une seule boucle rectangulaire. La dimension de la boucle est de l'ordre de la dimension des objets 5 que l'on cherche à détecter. Ceci permet d'obtenir un couplage inductif maximum entre l'antenne et l'objet. De façon connue le meilleur couplage est obtenu lorsque la mutuelle inductance entre l'antenne et l'objet est maximum. La profondeur d'investigation possible est alors de l'ordre de 3L où L est la dimension caractéristique de l'antenne. Dans le mode expérimenté de réalisation l'antenne était constituée par une boucle carrée. Dans ce cas L est égal au côté du carré. L'un des avantages de l'invention est de pouvoir utiliser une antenne de réception disposée comme on le souhaite en fonction de ce que l'on cherche. Il n'y a aucune contrainte a priori sur la forme et la position de l'antenne réceptrice. La seule contrainte est que l'antenne réelle qui est utilisée au cours de la phase recherche ait même forme et même disposition que l'antenne ayant servi à créer la base de données. Il peut s'agir d'une antenne fictive retenue pour calculer les données de la base de données. Il peut aussi s'agir d'une antenne réelle si les données ont été obtenues par expérimentation. Plusieurs solutions peuvent être envisagées.

La plus simple est d'utiliser l'antenne émettrice comme antenne réceptrice après la coupure de l'alimentation en courant dans cette antenne. C'est cette solution qui est représenté figure 2.

On peut aussi utiliser deux boucles horizontales situées l'une au-dessus de l'autre comme dans le cas du document [3]. On obtient de la sorte un gradient vertical du signal capté permettant de confirmer la profondeur de l'objet. Bien que le second signal soit faible du fait de l'absorption du champs électromagnétique par l'eau de mer, comme signalé plus haut à propos du brevet "Geonics" le signal est exploitable dans le cas de l'invention car on élimine le bruit, par le calcul d'un signal moyen comme signalé plus haut.

On peut aussi utiliser une boucle horizontale en forme de "huit" pour éliminer certains bruits spécifiques comme ceux dus aux déplacements des antennes émettrice et réceptrice. On utilise le dispositif ci-dessus décrit pour réaliser les recherches selon l'un des procédés indiqués lors de la brève description de l'invention. La base de données est créée soit par expérimentation, soit par calcul.

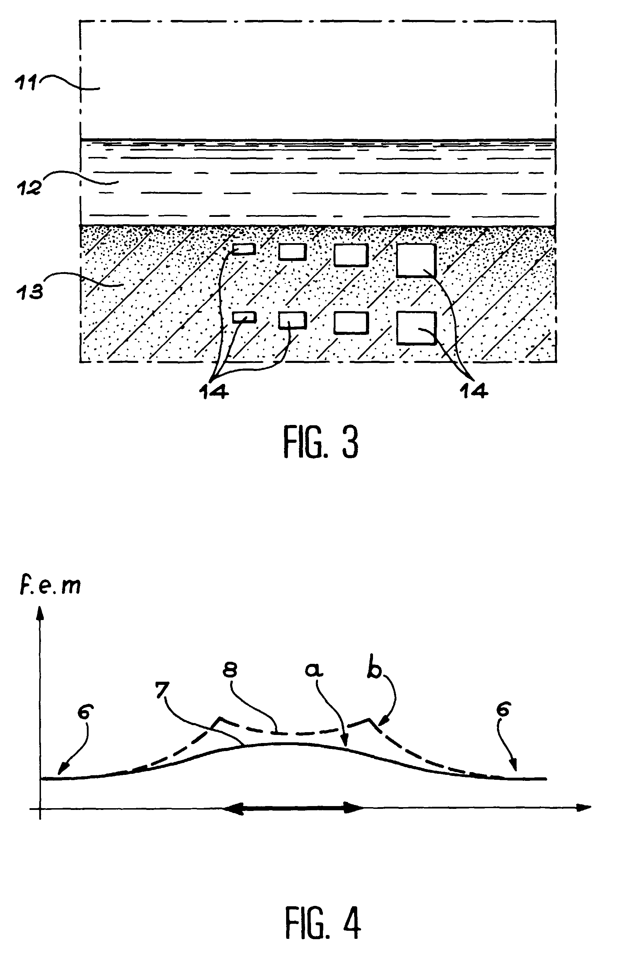

Lorsque la base est créée par expérimentation on enfouit dans le sol à des endroits connus et selon des positions connues des objets identiques à ceux recherchés, on enregistre les signaux reçus en retour. On calcule des enregistrements moyens dans les même conditions que celles qui seront utilisées lors de la phase de recherche. Lorsque la base est créée par le calcul on procède de même mais les émissions et réceptions, les antennes et les objets sont fictifs et définis par le calcul. Des indications sur le mode de calcul seront données plus loin. Dans les deux cas, une base de données est établie pour un type d'objet, par exemple une mine sous-marine. L'objet ou une forme conductrice représentative de l'objet est enfoui réellement ou fictivement à différentes profondeurs et dans des positions différentes comme représenté à titre d'exemple sur la figure 3. Cette figure représente une section du volume où des objets sont enfouis dans le sol, par un plan vertical. Sur cette figure 11 désigne la couche d'air, 12, la couche d'eau de mer et 13 la couche de sol qui constitue le fond marin. Des objets 14 de différentes tailles et de différentes formes, représentatifs des objets recherchés sont enfouis suffisamment loin les uns des autres pour n'exercer aucune influence magnétique entre eux ou ensemble sur les antennes de détection.

Si l'on utilise lors de la phase de recherche la première forme de traitement des signaux reçus, on stocke les valeurs moyennes d'échantillons formant ensemble une courbe réelle de décroissance, ceci pour chacun des endroits et chacune des positions où l'on a enfoui un objet.

Si l'on utilise lors de la phase de recherche la seconde forme de traitement des signaux reçus, on calcule les valeurs caractéristiques retenues de chaque courbe moyenne et on constitue l'espace à N dimensions. Dans le mode préféré de réalisation de ce second mode, il y a quatre caractéristiques sélectionnées. Ce sont : le délai de réception, le niveau maximum du signal reçu, la pente d'une partie médiane de la courbe dont la décroissance est sensiblement linéaire et la constante de temps de la décroissance. Ces quatre caractéristiques sont situées dans un espace à quatre dimensions. En variante selon le niveau de bruit, on pourra utiliser seulement une seule, deux ou trois de ces caractéristiques pour former selon toutes les combinaisons possibles, un espace à une, deux ou trois dimensions.

Le délai de réception, c'est-à-dire l'écart entre la fin de l'émission et la réception d'un signal de niveau significatif, donne une idée de la position de l'objet par rapport à l'antenne réceptrice.

Le niveau maximum du signal reçu est une indication sur la taille associée à la conductivité de l'objet.

La pente de la partie médiane de la courbe représente assez bien la conductivité de l'objet.

Enfin la constante de temps de la décroissance permet une corrélation entre les différentes caractéristiques ci-dessus.

Dans l'espace à quatre ou selon les variantes trois, deux ou une dimensions ainsi créé, on délimite un volume de détection, ce volume étant délimité par une surface enveloppe de tous les points contenus dans la base,

- on situe dans l'espace à quatre, trois, deux ou une dimensions de la base de données le point correspondant à la courbe réelle obtenue,
- on décide qu'il y a détection si le point de la courbe réelle obtenue est à l'intérieur du volume de détection, la position et la nature de l'objet étant déterminés en fonction des points voisins de l'espace.

Dans l'un ou l'autre des modes de traitement des signaux recueillis par l'antenne réceptrice on peut, de plus, confirmer la présence éventuelle d'un objet recherché par examen de variation du maximum de puissance du signal détecté. Lorsque le système de détection se déplace, ce maximum croît tant que l'on se rapproche de l'objet, passe éventuellement par un palier si l'on passe juste au-dessus de l'objet puis décroît ensuite. Ainsi si l'on balaie une zone on peut créer numériquement un espace de balayage à trois dimensions, deux dimensions représentant les coordonnées de l'antenne et une troisième dimension représentant le maximum de puissance des courbes moyennes créées par le traitement des signaux reçus. Dans cet espace de balayage, les différents points constitués par les deux coordonnées de la position géographique et du maximum de puissance des courbes moyennes définissent une surface dont les sommets définissent les coordonnées des objets enfouis. On a représenté en figure 4 la forme que prend la courbe représentant le maximum de puissance des courbes moyennes lors d'un déplacement rectiligne passant à proximité d'un objet enfoui matérialisé par une double flèche épaisse sur l'axe des abcisses. La courbe désignée par "a" sur cette figure représente la variation de la force électromotrice présente dans l'antenne lorsque la trajectoire est suffisamment proche de l'objet pour que l'on ait une détection mais encore relativement éloigné. La courbe "a" présente des zones 6, qui correspondent à des points trop éloignés de l'objet pour que l'on détecte un signal significatif, la zone 7 représente une zone de détection où le signal croît tant que l'on se rapproche de l'objet, passe par un maximum lorsqu'on est au plus prêt de l'objet puis décroît jusqu'à retrouver une zone 6 de non détection. La courbe désignée par "b" sur la figure 3 et dessinée en pointillés, représente la variation de la force électromotrice présente dans l'antenne lorsque la trajectoire est très proche voir au-dessus de l'objet. Elle est confondue avec la courbe "a" dans les zones 6. Dans la zone de détection le signal est évidemment plus fort. La courbe présente un quasi palier 8 lorsqu'on est immédiatement au-dessus ou très près de l'objet.

IL a été indiqué plus haut que la base de données servant à l'évaluation des signaux détectés pouvait être créée par le calcul. Des indications vont maintenant être données quant à la façon de calculer cette base.

La base de données est obtenu par un logiciel tri-dimensionnel (3D) spécifique développé pour la créer. Comme le but est un calcul le plus précis possible, le logiciel est tri-dimensionnel (3D) et utilise la formulation aux éléments finis. En effet, dans cette formulation, la forme particulière des objets peut être prise en compte de manière fine, alors que ce n'est pas le cas pour les méthodes aux différences finies, comme la méthode FDTD ("Finite-Differences Time-Domain") qui assimilent les objets à des cubes ou des parallélépipèdes rectangles [6].

Ce logiciel résout en 3D les équations de Maxwell dans le domaine temporel par une méthode aux éléments finis. Ces équations sont exprimées sous la forme de Helmholtz puisqu'on ne s'intéresse qu'au régime diffusif qui s'établit quelques micro-secondes après la fin d'une impulsion de courant. La base du programme est l'équation électromagnétique temporelle formulée en potentiel vecteur magnétique A et potentiel scalaire électrique $\Phi$ :

$$\text{curl}\left(\frac{1}{\mu}\,\text{curl}\,\overline{A}\right) - \text{grad}\,\eta\text{div}\overline{A} + \sigma\,\frac{\partial\overline{A}}{\partial t} + \sigma\text{grad}\,\phi = \overline{J}_s$$

équation de Helmholtz

$$\text{div}\left(\sigma\,\frac{\partial\overline{A}}{\partial t} + \sigma\text{grad}\,\phi\right) = 0 \quad \text{conservation du courant} \qquad (1)$$

La première équation est une équation vectorielle et la seconde équation est scalaire, elle traduit la conservation du courant électrique. Ici $J_s$ est le courant source qui n'est présent que dans la boucle émettrice pendant l'impulsion de courant. A et $\Phi$ sont les potentiels vecteur magnétique et scalaire électrique. L'utilisation des potentiels A et $\Phi$ a été choisie pour des raisons de continuité : ces derniers sont continus sur tout le domaine même lorsque les propriétés électromagnétiques des différentes régions du domaine sont différentes. De plus, le signal à modéliser étant dans cet exemple la f.e.m. sur l'antenne réceptrice, il suffit d'intégrer le potentiel vecteur magnétique A sur le contour de la boucle réceptrice.

Un terme de pénalité, (le second dans l'équation de Helmholtz) a été ajouté à la première équation pour contraindre le potentiel vecteur magnétique A à avoir une divergence nulle (jauge de Coulomb). De plus, ce terme de pénalité améliore le conditionnement de la matrice caractéristique du système, en rapprochant le rotationnel de la première équation d'un Laplacien, si la pénalité est judicieusement choisie en fonction de la permittivité magnétique du milieu.

De plus, pour rendre symétrique le système matriciel, il a été introduit une fonction auxiliaire W définie par [7]

$$\Phi = \frac{\partial W}{\partial t}$$

Le système (1) peut s'écrire de façon schématique :

$$L\,[u(x, t)] = f(x, t) \qquad (2)$$

où L, est un opérateur différentiel, x la variable d'espace et u l'inconnue. Dans notre cas u est le vecteur ($A_x$, $A_y$, $A_z$, W).

Les équations du système (1) ont ensuite été adaptées à la formulation aux éléments finis. Pour ce faire, nous utilisons tout d'abord le principe variationnel [8] qui consiste à projeter les équations aux dérivées partielles sur un ensemble de fonctions de pondération ($\beta_i$ i = 1,n), générateur de l'espace vectoriel.

D'autre part, la fonction inconnue u(x) est interpolée sur un maillage composé d'éléments (contenant les noeuds du calcul) au moyen de fonctions d'interpolation ($a_j$, J = 1,n)

$$u(x) = \sum_{j=1}^{n} a_j(x)u_j$$

Pour obtenir la meilleure possible, les fonctions d'interpolation sont des polynômes du second degré (méthode au second ordre).

Comme l'opérateur L est linéaire U et L(u) appartiennent au même espace vectoriel. On peut alors choisir les fonctions de pondération et d'interpolation identiques (méthode de Galerkine). On obtient finalement un système linéaire de 4 x n équations à 4 x n inconnues qui peut s'écrire :

$$[\Lambda]\{u\} = \{S\} \qquad (3)$$

$\Lambda$ est la matrice des intégrants "matriciels" et S le vecteur des intégrants "vectoriels". La matrice $\Lambda$ est très creuse, puisque les termes sont non nuls seulement si les noeuds définis par leurs indices de ligne i et de colonne j appartiennent au même élément. Plus précisément, le système matriciel, dans le domaine temporel, s'écrit en explicitant les inconnues et les sources :

$$\lfloor \ M\Delta t + L \rfloor \{A, W\}_{n+1} = [L]\{A, W\}n + \{K_s \Delta t\} \tag{4}$$

où $\Delta t$ est le pas en temps, et $K_s$ le vecteur des sources : dans (4) nous avons séparé les termes dépendant du temps des termes invariant avec le temps.

Il est alors nécessaire d'évaluer les intégrants de façon numérique pour former le système matriciel. Ces intégrants sont évalués par la méthode de Gauss-Legendre [9].

Finalement, la résolution du système matriciel (inversion) se fait par une méthode de décomposition LU (Lower-Upper) ; en fait, le pas de temps $\Delta t$ doit être adapté au transitoire : très petit pour des variations fortes des courants, plus grand lorsque le transitoire s'amortit et plus grand encore pour obtenir un régime permanent pendant l'impulsion de courant. Nous ne pouvons nous contenter d'utiliser tout au long du calcul la valeur la plus petite, car le calcul deviendrait trop long. Nous avons choisi de faire varier le pas de temps par paliers, ce qui a l'avantage de conserver constante sur un palier la matrice à inverser du système (4). Une inversion de type LU, bien que longue à réaliser, permet alors sur un palier de résoudre le système par simple multiplication par la matrice inverse.

La méthode numérique peut être ainsi résumée :

- on part des équations de Helmholtz-Maxwell
- on effectue une projection de Galerkine au second ordre
- on forme les intégrants
- on évalue numériquement les intégrants
- on forme le système matriciel
- on résout le système par calcul de la matrice inverse par inversion de type LU.

Pour des raisons de simplicité, nous avons introduit le système matriciel à inverser dans le système de résolution Flux-Expert [10] qui présente un cadre commode à notre approche.

ANNEXE

**LISTE DES REFERENCES CITEES**

[1] G.J. Heald, H.D. Griffiths, "A review of underwater detection techniques and their applicability to the landmine problem," Second International Conference on the detection of abandoned land mines, 12-14 October 1998, Edinburg.

[2] Y. Nagashima, Y. Sudo, J. Masuda, Y. Matsudaira, K. Arita, E. Nagai, "Pulse radar method and apparatus for detecting an object," United States Patent 4896116, Jan. 23, 1990.

[3] J.D. Mc Neill, "Method for detecting buried high conductivity objects including scaling of voltages for eliminating noise of a particular depth," United States Patent 5654637, Aug. 5, 1997.

[4] G. Keller, "Non obstrusive weapon detection system and other metal object," World Patent WO 98/08106, february 1998.

[5] P. Elliot, "Airborne transient electromagnetic method with ground loops," World Patent WO 92/19989, november 1992.

[6] A. Taflove. Computational Electrodynamics. The Finite-Diffrence Time-Domaine method. Artech House, Boston, 1995.

[7] O. Biro, K. Preis, "On the use of magnetic vector potential in the finite element analysis of three-dimensional eddy currents," IEEE Trans. Magn., vol. 25, n° 4, pp 3145-3159, July 1989.

[8] D. Euvrard, "Résolution numérique des équations aux dérivées partielles ; différences finies, éléments finis, méthode des singularités," Masson, 1990.

[9] M. Abramovitz, I. Stegun, "Handbook of mathematical functions," Dower publications Inc., 1964.

[10] Flux-Expert, registered trademark of SIMULOG, 60 rue Lavoisier, 38330 Montbonnot St Martin, France.

**Revendications**

**1.** Procédé de détection et de localisation d'objets électriquement conducteurs enfouis dans un sous-sol, le procédé consistant à envoyer une série d'impulsions électromagnétiques vers le milieu à explorer, au moyen d'une antenne émettrice ayant au moins une boucle, et à comparer un signal reçu en retour sur une antenne réceptrice ayant au moins une boucle, à au moins une caractéristique de signaux stockés dans une base de données, procédé caractérisé en ce que :

- les caractéristiques des signaux stockés dans la base de données sont constituées par des points dans un espace à N dimensions, N étant un nombre entier supérieur à 1, les dimensions représentant des valeurs caractéristiques d'une courbe de décroissance dans le temps de la valeur de signaux reçus dans une phase préalable à la recherche, par une première antenne réceptrice utilisée pour la formation de la base de données, placée au-dessus d'un sous-sol dans lequel est enfoui un objet ayant une forme conductrice extérieure identique ou proche d'un objet recherché, ceci pour différentes tailles et profondeurs de l'objet, après émission d'impulsions par une première antenne émettrice de formation de la base de données et
- on délimite dans l'espace à N dimensions un volume de détection, ce volume étant délimité par une surface enveloppe de tous les points contenus dans la base,

ensuite dans une phase de recherche,

- on enregistre périodiquement des valeurs numériques d'échantillons de rang 1, 2,.....n représentant ensemble une courbe de décroissance réelle d'un signal reçu par une antenne réceptrice de détection ayant même forme et même disposition par rapport au sous-sol que l'antenne réceptrice ayant servi à créer la base de données, ce signal étant reçu après émission par une antenne réelle ayant même forme et même disposition par rapport au sous-sol que l'antenne émettrice ayant servi à la formation des caractéristiques préenregistrées,
- on crée une courbe de décroissance moyenne d'un signal reçu moyen par détermination, de valeurs moyennes d'échantillons, dont chacune représente la valeur moyenne des valeurs d'échantillons de même rang,
- on détermine sur la courbe de décroissance moyenne les même valeurs caractéristiques que celle enregistrées dans la base de données,
- on situe dans l'espace à N dimensions de la base de données le point correspondant à la courbe réelle obtenue,
- on décide qu'il y a détection si le point de la courbe réelle obtenue est à l'intérieur du volume de détection, la position et la nature de l'objet étant déterminés en fonction des points voisins de l'espace.

2. Procédé de détection et de localisation d'objets électriquement conducteurs enfouis dans un sous-sol, selon la revendication 1 caractérisé en ce que les caractéristiques des signaux stockés dans la base de données sont constitués par des groupes de données numériques constituant un espace à quatre, trois, deux ou une dimensions, les dimensions représentant, un délai de réception, un niveau maximum du signal, une pente d'une partie linéaire médiane, une constante de temps de décroissance de la courbe de décroissance dans le temps.

3. Procédé de détection et de localisation d'objets électriquement conducteurs enfouis dans un sous-sol, le procédé consistant à envoyer une série d'impulsions électromagnétiques dans le milieu à explorer, au moyen d'une antenne émettrice ayant au moins une boucle, et à comparer un signal reçu en retour sur une antenne réceptrice ayant au moins une boucle, à au moins une caractéristique de signaux stockés dans une base de données procédé caractérisé en ce que :

- les caractéristiques des signaux stockés dans la base de données sont constituées par des données numériques définissant chacune dans le domaine temporel, la forme d'une courbe de décroissance de la valeur de signaux reçus dans une phase préalable à la recherche, par une première antenne réceptrice de formation de la base de données, placée au-dessus d'un sous-sol dans lequel est enfoui un objet ayant une forme conductrice extérieure identique ou proche d'un objet recherché, ceci pour différentes tailles et profondeurs de l'objet, après émission d'impulsions par une première antenne émettrice de formation de la base de données, et

ensuite dans une phase de recherche,

- on enregistre périodiquement des valeurs numériques d'échantillons de rang 1, 2,....n représentant ensemble une courbe de décroissance réelle d'un signal reçu par une antenne réceptrice de détection ayant même forme et même disposition par rapport au sous-sol que l'antenne réceptrice ayant servi à créer la base de données, ce signal étant reçu après émission par une antenne réelle ayant même forme et même disposition par rapport au sous-sol que l'antenne émettrice ayant servi à la formation des caractéristiques préenregistrées,
- on crée une courbe de décroissance moyenne d'un signal reçu moyen par détermination, de valeurs moyennes d'échantillons, dont chacune représente la valeur moyenne des valeurs d'échantillons de même rang,

- on calcule une valeur représentant un écart entre la courbe de décroissance réelle moyenne et chacune des courbes de décroissance des signaux numériques préenregistrés,
- on compare à une valeur seuil, la plus petite des valeurs représentant l'écart entre la courbe de décroissance réelle moyenne et chacune des courbes de décroissance préenregistrées,
- on décide qu'il y a détection si au moins une valeur représentant un écart entre cette courbe moyenne de décroissance et l'une des courbes de décroissance préenregistrées est inférieure à un seuil prédéterminé, l'objet et sa profondeur d'enfouissement étant définis comme l'objet de la base de données qui a présenté la valeur d'écart minimum.

4. Procédé de détection et de localisation selon l'une des revendications 1 à 3 caractérisé en ce que les données numériques enregistrées dans la base de données sont des données obtenues par mesures préalables effectuées dans les conditions prévues de la détection ultérieure en enfouissant à des positions connues des objets semblables à ceux recherchés.

5. Procédé de détection et de localisation selon l'une des revendications 1 à 3 caractérisé en ce que les données numériques enregistrées dans la base de données sont des données obtenues par le calcul.

6. Procédé de détection et de localisation selon la revendication 5, caractérisé en ce que les données numériques enregistrées dans la base de données sont des données obtenues par le calcul de la façon ci-après :

- on part des équations de Helmholtz-Maxwell
- on effectue une projection de Galerkine au second ordre
- on forme les intégrants
- on évalue numériquement les intégrants
- on forme le système matriciel
- on résout le système par calcul de la matrice inverse par inversion de type LU.

7. Utilisation du procédé selon l'une des revendications précédentes pour détecter des objets conducteurs enfouis dans un sous-sol marin.

FIG. 1

FIG. 2

FIG. 3

FIG. 4

Office européen
des brevets

**RAPPORT DE RECHERCHE EUROPEENNE**

Numéro de la demande

EP 00 40 1504

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| A | US 3 950 695 A (BARRINGER ANTHONY RENE) 13 avril 1976 (1976-04-13) * colonne 5, ligne 26 - colonne 8, ligne 30 * --- | 1,3-5 | G01V3/38 G01V3/12 G01V3/15 |
| A | FR 2 753 280 A (PLYMOUTH FRANCAISE SA) 13 mars 1998 (1998-03-13) * page 6, ligne 1 - ligne 20 * --- | 1 | |
| A | US 5 159 343 A (HARMUTH HENNING F) 27 octobre 1992 (1992-10-27) * revendications 1,2 * ----- | 3,5 | |

| DOMAINES TECHNIQUES RECHERCHES (Int.Cl.7) |
|---|
| G01V G01S |

Le présent rapport a été établi pour toutes les revendications

| Lieu de la recherche | Date d'achèvement de la recherche | Examinateur |
|---|---|---|
| LA HAYE | 2 août 2000 | Häusser, T |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**  EP 00 40 1504

La présente annexe indique les membres de la famille de brevets relatifs aux documents brevets cités dans le rapport de
recherche européenne visé ci–dessus.
Lesdits members sont contenus au fichier informatique de l'Office européen des brevets à la date du
Les renseignements fournis sont donnés à titre indicatif et n'engagent pas la responsabilité de l'Office européen des brevets.

02–08–2000

| Document brevet cité au rapport de recherche | Date de publication | Membre(s) de la famille de brevet(s) | | Date de publication |
|---|---|---|---|---|
| US 3950695 A | 13–04–1976 | AUCUN | | |
| FR 2753280 A | 13–03–1998 | AU | 4212297 A | 26–03–1998 |
| | | EP | 0923746 A | 23–06–1999 |
| | | WO | 9810313 A | 12–03–1998 |
| US 5159343 A | 27–10–1992 | US | 5153595 A | 06–10–1992 |

EPO FORM P0460

Pour tout renseignement concernant cette annexe : voir Journal Officiel de l'Office européen des brevets, No.12/82